# EUROPEAN PATENT SPECIFICATION

(11) **EP 4 659 096 B1**
(45) Date of publication and mention of the grant of the patent: **10.06.2026**
(21) Application number: 24701832.8
(22) Date of filing: 19.01.2024
(51) Int. Cl.: G06F 3/06

(54) **STORAGE DATA COPIES WITH DIFFERING COMPRESSION ALGORITHMS**
SPEICHERDATENKOPIEN MIT VERSCHIEDENEN KOMPRESSIONSALGORITHMEN
COPIES DE DONNÉES DE STOCKAGE AVEC DIFFÉRENTS ALGORITHMES DE COMPRESSION

(30) Priority: 01.02.2023 GB 202301423
(43) Date of publication of application: 10.12.2025
(73) Proprietor: International Business Machines Corporation, Armonk, New York 10504 (US)
(72) Inventor: MOORE, Roderick, Guy, Charles, Winchester Hampshire SO21 2JN (GB); SASSON, Ben, Winchester Hampshire SO21 2JN (GB); SANDERS, Lee, Jason, Winchester Hampshire SO21 2JN (GB); CASHMAN, Paul, Nicholas, Winchester Hampshire SO21 2JN (GB)
(74) Representative: IBM United Kingdom Limited
(86) International application number: PCT/EP2024/051313
(87) International publication number: WO 2024/160565

(56) References cited:
- EP-A1- 3 707 610
- US-A1- 2020 004 631
- US-A1- 2020 192 758
- US-A1- 2022 414 061
- US-B1- 10 929 040

## Description

### Technical Field

The invention is generally directed to storage. In particular it provides a method, system, and computer program product suitable for managing a storage array in a storage system.

### Background Art

Many computer systems use a redundant array of independent disks (RAID) for data storage purposes. This allows for improved data transfer rates over a single disk access, and also provides error correction, data protection and disk redundancy. Disks are also known as 'disk drives', or simply 'drives'.

RAID systems are disk array storage systems created to provide large storage areas, fast access times and rate, and also redundancy for data protection. For example, data can be mirrored across two or more disks, so if one disk fails, the data is available from the remaining disks. Alternatively, data can be spread over multiple disks allowing concurrent reading of data. Data parity can also be provided in a further disk, so if one disk fails, data can be recreated from the remaining disks. RAID systems are controlled by a RAID controller, which is a hardware unit that configures a RAID array and provides a RAID layer, so that to a using computer system, a disk array appears as a logical, single disk.

Most modern storage controllers will use a RAID algorithm to spread data across multiple disks to add redundancy prevent data loss on a disk failure.

Advanced copy services are also available. Advanced copy services copy data from one disk to another for a variety of purposes, for example, backup.

Some modern disks, such as IBM ^{®} FlashCore Modules (FCM), implement internal, hardware-based compression algorithms. It is not unrealistic for a disk to support more than one algorithm at the same time, choosing which one to use for a certain write based on internal logic. The different compression algorithms will have different characteristics of compressibility and speed of compression. The higher the compression ratio the longer the disk takes to compress. Different compression algorithms can be used for different copies of the same data, so that on reading that data an appropriate copy can be used matching specified performance characteristics. However this can lead to an unbalanced systems in terms of performance.

United States Patent number US 10/929,040 B1, Trachtman, Michael, ("RAID 1-half Compressed Data Storage", 23 February 2021) discloses In a half-compressed RAID 1 system a first copy of a data set is maintained in an uncompressed state and a second copy of the data set is maintained in a compressed state, where corresponding compressed and uncompressed blocks are stored on different physical devices. The result is RAID 1 reliability with storage space consumption similar to RAID 5-3+1. Compression striping in which the compressed and uncompressed data is distributed across two or more storage devices can be used to reduce data access response time. Further, delayed compression can be used to reduce the time required to perform WRITE ops. Compression may also be performed based on resource availability or storage tier hierarchy.

European Patent Application publication number EP 3707610 A1 ("Method, Apparatuses, Computer Programs and Computer Program Products for Data Storage", 16 September 2020) discloses a data storage system in which different copies of a data object (e.g., a file) can be compressed using different compression processes (e.g. different compression algorithms/processes and/or compression parameters), with some favoring faster decompression, while others favoring storage space savings. When a data object needs to be accessed, the copy of the data object that can be decompressed using minimal resource (computing and/or time) can be located and retrieved.

United States Patent Publication Number US 2020/192758 A1, Pletka, R.A. et al. ("Adaptive Data and Parity Placement Using Compression Ratios of Storage Devices", 18 June 2020) discloses Embodiments for adaptive placement of parity information within Redundant Array of Independent Disks (RAID) stripes in a computer storage environment. A RAID controller periodically collects a physical capacity usage of each of a plurality of storage devices within the RAID. The RAID controller determines a placement of data and the parity information within at least one of the plurality of storage devices according to at least one of a plurality of factors associated with the physical capacity usage. The RAID controller writes the data and the parity information to the at least one of the plurality of storage devices according to the determined placement.

United States Patent Publication Number US 2020/004631 A1, Jaquette, G. et al. ("Efficient Utilization of Storage Space in Arrays of Storage Drives", 02 January 2020) discloses a method for more efficiently utilizing storage space in a set of storage drives. In one embodiment, such a method implements, in a set of storage drives, a first RAID utilizing data striping with distributed parity values. The method further implements, in a subset of the set of storage drives, a second RAID using residual storage space in storage drives belonging to the subset. Storage drives belonging to the subset may have a storage capacity that is larger than storage drives not belonging to the subset. In certain embodiments, the method adaptively alters a parity rotation of the first RAID to provide an increased concentration of parity values in certain storage drives of the first RAID compared to other storage drives of the first RAID. A corresponding system and computer program product are also disclosed.

Therefore, there is a need in the art to address the aforementioned problem

### Summary of Invention

According to the present invention there are provided a method, a system, a computer program product and a computer-readable medium according to the independent claims.

Having a disk that supports two different compression algorithms, one faster but less space-efficient and the second slower but more compact, a copying algorithm in a storage controller can chose to write one copy to fast/low compressing storage and the second to slow/high compression. If this choice of low/high compression is distributed across the disks such that the total used storage is consistent across all disks then the total storage used will be less than conventional copying and thus there is a reduced total cost of storage. Advantageously, by using this algorithm the benefit of higher compression to save space can be used while the impact of the slower performance can be hidden. Writes can complete when the faster, low compressed writes has completed, and any Read would not be impacted by needing to do a slower decompression as the reads can always be directed to the mirror with the low compressed version of the data.

### Brief Description of the Drawings

The present invention will now be described, by way of example only, with reference to preferred embodiments, as illustrated in the following figures:
FIG. 1 depicts a computing environment 100, according to an embodiment of the present invention;
FIG. 2 depicts a high-level exemplary schematic diagram 200 depicting storage drives, according to an embodiment of the present invention;
FIG. 3 depicts a high-level exemplary schematic flow diagram 300 depicting operation methods steps for writing a storage block in a storage array, according to a preferred embodiment of the present invention;
FIG. 4 depicts a high-level exemplary schematic diagram 400 depicting storage disks, according to a preferred embodiment of the present invention;
FIG. 5 depicts a high-level exemplary schematic diagram 500 depicting a storage controller, according to a preferred embodiment of the present invention;
FIG. 6 depicts a high-level exemplary schematic diagram 600 depicting a computer system, according to a preferred embodiment of the present invention; and
FIG. 7 depicts a high-level exemplary schematic diagram 700 depicting tables used to determine a pattern of compression ratios, according to a preferred embodiment of the present invention.

### Detailed Description

Various aspects of the present disclosure are described by narrative text, flowcharts, block diagrams of computer systems and/or block diagrams of the machine logic included in computer program product (CPP) embodiments. With respect to any flowcharts, depending upon the technology involved, the operations can be performed in a different order than what is shown in a given flowchart. For example, again depending upon the technology involved, two operations shown in successive flowchart blocks may be performed in reverse order, as a single integrated step, concurrently, or in a manner at least partially overlapping in time.

A computer program product embodiment ("CPP embodiment" or "CPP") is a term used in the present disclosure to describe any set of one, or more, storage media (also called "mediums") collectively included in a set of one, or more, storage devices that collectively include machine readable code corresponding to instructions and/or data for performing computer operations specified in a given CPP claim. A "storage device" is any tangible device that can retain and store instructions for use by a computer processor. Without limitation, the computer readable storage medium may be an electronic storage medium, a magnetic storage medium, an optical storage medium, an electromagnetic storage medium, a semiconductor storage medium, a mechanical storage medium, or any suitable combination of the foregoing. Some known types of storage devices that include these mediums include: diskette, hard disk, random access memory (RAM), read-only memory (ROM), erasable programmable read-only memory (EPROM or Flash memory), static random access memory (SRAM), compact disc read-only memory (CD-ROM), digital versatile disk (DVD), memory stick, floppy disk, mechanically encoded device (such as punch cards or pits / lands formed in a major surface of a disc) or any suitable combination of the foregoing. A computer readable storage medium, as that term is used in the present disclosure, is not to be construed as storage in the form of transitory signals *per se,* such as radio waves or other freely propagating electromagnetic waves, electromagnetic waves propagating through a waveguide, light pulses passing through a fiber optic cable, electrical signals communicated through a wire, and/or other transmission media. As will be understood by those of skill in the art, data is typically moved at some occasional points in time during normal operations of a storage device, such as during access, de-fragmentation or garbage collection, but this does not render the storage device as transitory because the data is not transitory while it is stored.

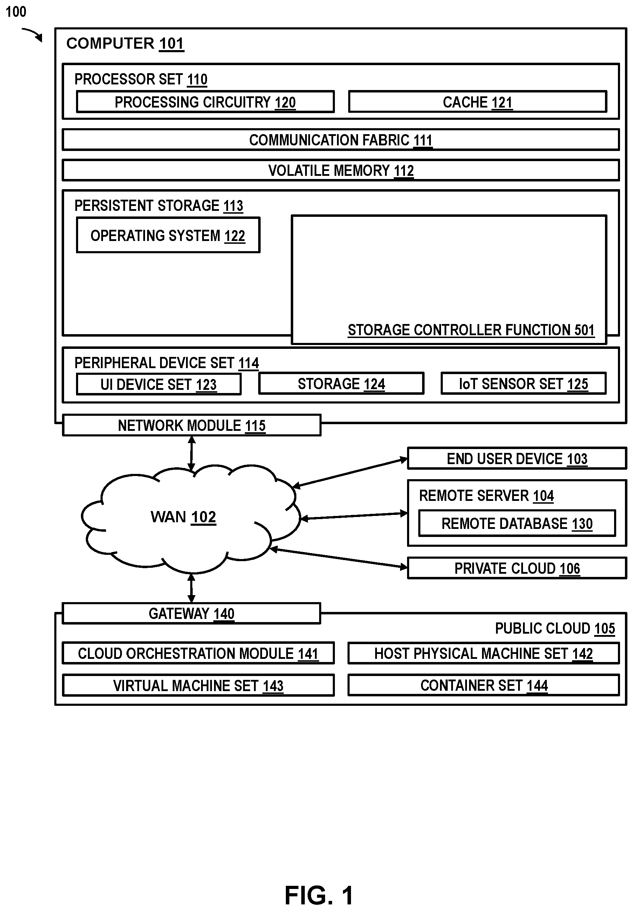

FIG. 1 depicts a computing environment 100. Computing environment 100 contains an example of an environment for the execution of at least some of the computer code involved in performing the inventive methods, such as functionality 200 for an improved storage controller 501. In addition to block 200, computing environment 100 includes, for example, computer 101, wide area network (WAN) 102, end user device (EUD) 103, remote server 104, public cloud 105, and private cloud 106. In this embodiment, computer 101 includes processor set 110 (including processing circuitry 120 and cache 121), communication fabric 111, volatile memory 112, persistent storage 113 (including operating system 122 and block 200, as identified above), peripheral device set 114 (including user interface (UI) device set 123, storage 124, and Internet of Things (IoT) sensor set 125), and network module 115. Remote server 104 includes remote database 130. Public cloud 105 includes gateway 140, cloud orchestration module 141, host physical machine set 142, virtual machine set 143, and container set 144.

COMPUTER 101 may take the form of a desktop computer, laptop computer, tablet computer, smart phone, smart watch or other wearable computer, mainframe computer, quantum computer or any other form of computer or mobile device now known or to be developed in the future that is capable of running a program, accessing a network or querying a database, such as remote database 130. As is well understood in the art of computer technology, and depending upon the technology, performance of a computer-implemented method may be distributed among multiple computers and/or between multiple locations. On the other hand, in this presentation of computing environment 100, detailed discussion is focused on a single computer, specifically computer 101, to keep the presentation as simple as possible. Computer 101 may be located in a cloud, even though it is not shown in a cloud in Figure 1. On the other hand, computer 101 is not required to be in a cloud except to any extent as may be affirmatively indicated.

PROCESSOR SET 110 includes one, or more, computer processors of any type now known or to be developed in the future. Processing circuitry 120 may be distributed over multiple packages, for example, multiple, coordinated integrated circuit chips. Processing circuitry 120 may implement multiple processor threads and/or multiple processor cores. Cache 121 is memory that is located in the processor chip package(s) and is typically used for data or code that should be available for rapid access by the threads or cores running on processor set 110. Cache memories are typically organized into multiple levels depending upon relative proximity to the processing circuitry. Alternatively, some, or all, of the cache for the processor set may be located "off chip." In some computing environments, processor set 110 may be designed for working with qubits and performing quantum computing.

Computer readable program instructions are typically loaded onto computer 101 to cause a series of operational steps to be performed by processor set 110 of computer 101 and thereby effect a computer-implemented method, such that the instructions thus executed will instantiate the methods specified in flowcharts and/or narrative descriptions of computer-implemented methods included in this document (collectively referred to as "the inventive methods"). These computer readable program instructions are stored in various types of computer readable storage media, such as cache 121 and the other storage media discussed below. The program instructions, and associated data, are accessed by processor set 110 to control and direct performance of the inventive methods. In computing environment 100, at least some of the instructions for performing the inventive methods may be stored in block 200 in persistent storage 113.

COMMUNICATION FABRIC 111 is the signal conduction path that allows the various components of computer 101 to communicate with each other. Typically, this fabric is made of switches and electrically conductive paths, such as the switches and electrically conductive paths that make up busses, bridges, physical input / output ports and the like. Other types of signal communication paths may be used, such as fiber optic communication paths and/or wireless communication paths.

VOLATILE MEMORY 112 is any type of volatile memory now known or to be developed in the future. Examples include dynamic type random access memory (RAM) or static type RAM. Typically, volatile memory 112 is characterized by random access, but this is not required unless affirmatively indicated. In computer 101, the volatile memory 112 is located in a single package and is internal to computer 101, but, alternatively or additionally, the volatile memory may be distributed over multiple packages and/or located externally with respect to computer 101.

PERSISTENT STORAGE 113 is any form of non-volatile storage for computers that is now known or to be developed in the future. The non-volatility of this storage means that the stored data is maintained regardless of whether power is being supplied to computer 101 and/or directly to persistent storage 113. Persistent storage 113 may be a read only memory (ROM), but typically at least a portion of the persistent storage allows writing of data, deletion of data and re-writing of data. Some familiar forms of persistent storage include magnetic disks and solid state storage devices. Operating system 122 may take several forms, such as various known proprietary operating systems or open source Portable Operating System Interface-type operating systems that employ a kernel. The code included in block 200 typically includes at least some of the computer code involved in performing the inventive methods.

PERIPHERAL DEVICE SET 114 includes the set of peripheral devices of computer 101. Data communication connections between the peripheral devices and the other components of computer 101 may be implemented in various ways, such as Bluetooth connections, Near-Field Communication (NFC) connections, connections made by cables (such as universal serial bus (USB) type cables), insertion-type connections (for example, secure digital (SD) card), connections made through local area communication networks and even connections made through wide area networks such as the internet. In various embodiments, UI device set 123 may include components such as a display screen, speaker, microphone, wearable devices (such as goggles and smart watches), keyboard, mouse, printer, touchpad, game controllers, and haptic devices. Storage 124 is external storage, such as an external hard disk, or insertable storage, such as an SD card. Storage 124 may be persistent and/or volatile. In some embodiments, storage 124 may take the form of a quantum computing storage device for storing data in the form of qubits. In embodiments where computer 101 is required to have a large amount of storage (for example, where computer 101 locally stores and manages a large database) then this storage may be provided by peripheral storage devices designed for storing very large amounts of data, such as a storage area network (SAN) that is shared by multiple, geographically distributed computers. IoT sensor set 125 is made up of sensors that can be used in Internet of Things applications. For example, one sensor may be a thermometer and another sensor may be a motion detector.

NETWORK MODULE 115 is the collection of computer software, hardware, and firmware that allows computer 101 to communicate with other computers through WAN 102. Network module 115 may include hardware, such as modems or Wi-Fi signal transceivers, software for packetizing and/or de-packetizing data for communication network transmission, and/or web browser software for communicating data over the internet. In some embodiments, network control functions and network forwarding functions of network module 115 are performed on the same physical hardware device. In other embodiments (for example, embodiments that utilize software-defined networking (SDN)), the control functions and the forwarding functions of network module 115 are performed on physically separate devices, such that the control functions manage several different network hardware devices. Computer readable program instructions for performing the inventive methods can typically be downloaded to computer 101 from an external computer or external storage device through a network adapter card or network interface included in network module 115.

WAN 102 is any wide area network (for example, the internet) capable of communicating computer data over non-local distances by any technology for communicating computer data, now known or to be developed in the future. In some embodiments, the WAN 102 may be replaced and/or supplemented by local area networks (LANs) designed to communicate data between devices located in a local area, such as a Wi-Fi network. The WAN and/or LANs typically include computer hardware such as copper transmission cables, optical transmission fibers, wireless transmission, routers, firewalls, switches, gateway computers and edge servers.

END USER DEVICE (EUD) 103 is any computer system that is used and controlled by an end user (for example, a customer of an enterprise that operates computer 101), and may take any of the forms discussed above in connection with computer 101. EUD 103 typically receives helpful and useful data from the operations of computer 101. For example, in a hypothetical case where computer 101 is designed to provide a recommendation to an end user, this recommendation would typically be communicated from network module 115 of computer 101 through WAN 102 to EUD 103. In this way, EUD 103 can display, or otherwise present, the recommendation to an end user. In some embodiments, EUD 103 may be a client device, such as thin client, heavy client, mainframe computer, desktop computer and so on.

REMOTE SERVER 104 is any computer system that serves at least some data and/or functionality to computer 101. Remote server 104 may be controlled and used by the same entity that operates computer 101. Remote server 104 represents the machine(s) that collect and store helpful and useful data for use by other computers, such as computer 101. For example, in a hypothetical case where computer 101 is designed and programmed to provide a recommendation based on historical data, then this historical data may be provided to computer 101 from remote database 130 of remote server 104.

PUBLIC CLOUD 105 is any computer system available for use by multiple entities that provides on-demand availability of computer system resources and/or other computer capabilities, especially data storage (cloud storage) and computing power, without direct active management by the user. Cloud computing typically leverages sharing of resources to achieve coherence and economies of scale. The direct and active management of the computing resources of public cloud 105 is performed by the computer hardware and/or software of cloud orchestration module 141. The computing resources provided by public cloud 105 are typically implemented by virtual computing environments that run on various computers making up the computers of host physical machine set 142, which is the universe of physical computers in and/or available to public cloud 105. The virtual computing environments (VCEs) typically take the form of virtual machines from virtual machine set 143 and/or containers from container set 144. It is understood that these VCEs may be stored as images and may be transferred among and between the various physical machine hosts, either as images or after instantiation of the VCE. Cloud orchestration module 141 manages the transfer and storage of images, deploys new instantiations of VCEs and manages active instantiations of VCE deployments. Gateway 140 is the collection of computer software, hardware, and firmware that allows public cloud 105 to communicate through WAN 102.

Some further explanation of virtualized computing environments (VCEs) will now be provided. VCEs can be stored as "images." A new active instance of the VCE can be instantiated from the image. Two familiar types of VCEs are virtual machines and containers. A container is a VCE that uses operating-system-level virtualization. This refers to an operating system feature in which the kernel allows the existence of multiple isolated user-space instances, called containers. These isolated user-space instances typically behave as real computers from the point of view of programs running in them. A computer program running on an ordinary operating system can utilize all resources of that computer, such as connected devices, files and folders, network shares, CPU power, and quantifiable hardware capabilities. However, programs running inside a container can only use the contents of the container and devices assigned to the container, a feature which is known as containerization.

PRIVATE CLOUD 106 is similar to public cloud 105, except that the computing resources are only available for use by a single enterprise. While private cloud 106 is depicted as being in communication with WAN 102, in other embodiments a private cloud may be disconnected from the internet entirely and only accessible through a local/private network. A hybrid cloud is a composition of multiple clouds of different types (for example, private, community or public cloud types), often respectively implemented by different vendors. Each of the multiple clouds remains a separate and discrete entity, but the larger hybrid cloud architecture is bound together by standardized or proprietary technology that enables orchestration, management, and/or data/application portability between the multiple constituent clouds. In this embodiment, public cloud 105 and private cloud 106 are both part of a larger hybrid cloud.

A logical unit number (LUN) is a unique identifier for identifying a collection of physical or logical storage. A LUN can reference a single disk, a partition of disks, or an entire RAID array. Logical block addressing (LBA) is a method for specifying a location of blocks of data on storage devices.

Small Computer System Interface (SCSI) a set of command set standards for physically connecting and transferring data between computers and peripheral devices, such as disks. The skilled person would understand that there are other command sets. SCSI is available in a number of interfaces, for example, SSA, 1 Gbit Fibre Channel (1GFC), SAS. SCSI can be parallel or serial.

In the storage subsystems of IBM^{®} DS8000^{®} series, IBM Storwize^{®}, and IBM FlashSystem, the SAS protocol is used for the internal disks. The storage subsystems have controllers that provide the required hardware adapters for host connectivity to the subsystem. RAID adapters are used to create a virtual disk or logical unit number (LUN) that is configured in one of the supported RAID levels with multiple SAS hard disks based on the level of RAID used. Various levels of RAID of available to configure internal SAS HDDs or SDDs. IBM, DS8000, Storwize, FlashCopy are trademarks of International Business Machines Corporation, registered in many jurisdictions worldwide.

There are a number of RAID architectures, depending on the required balance between fault tolerance and performance. These architectures are known as 'levels'. In RAID level 0, data blocks are striped across a disk array without any faut tolerance. In RAID level 1, data is mirrored across two disks. In RAID 5, data blocks are striped across the disks and on one disk a parity checksum of all the block data is written. The parity data are not written to a fixed disk, they are spread across all disks. If a disk fails, data can be recovered using the remaining block data and the block. In RAID level 6 data blocks and also dual parities are striped across the disks. RAID 6 can handle dual disk failures.

There are also other RAID levels that can be used. In RAID level 2, data bits are striped across a set of data disks, and error correction codes are written to redundancy disks. In RAID level 3 data bytes are striped across a set of data disks, and parity values are written to parity disks. In RAID level 4 data blocks are striped across a set of data disks, and parity values are written to parity disks.

Additionally, other nested combinations of RAID are possible. Nested RAID levels are usually numbered with at least two digits. The first digit designates the lowest RAID level, and the second digit designates a level above. For example RAID 10 is a combination of RAID 1 and RAID 0, with the striping of RAID 1 above the mirroring of RAID 1. Other examples are: RAID15 which is a combination of RAID 5 above RAID 1; RAID 51, which is a combination of RAID 1 above RAID 5; and RAID 61, which is a combination of RAID 1 above RAID 6.

On each physical disk data is stored in predefined blocks of data generally having the same size. A predefined number of blocks of data, and any appropriate parity information are mapped to define a stripe of data, which is distributed across the elements of the RAID array 220. A typical size of strip is 8k to 64k bytes. A "stripe" is a group of corresponding stripe units.

Common RAID levels are:
- **RAID** 0 Data striped across one or more disks, no redundancy
- **RAID** 1 Data is mirrored between two disks
- **RAID** 5 Data is striped across a minimum of three disks with one rotating parity
- **RAID** 6 Data is striped across a minimum of five disks with two rotating parities
- **RAID 10** Data is striped across pairs of mirrored disks, with a minimum of two disks

RAID arrays can be configured using a hardware adapter. This is termed 'hardware RAID'. RAID arrays can also be configured using operating system software. This is termed 'software RAID'.

In storage systems, data can be lost if a disk that the data is stored on fails. With fault tolerant RAID levels, for example, RAID 1, RAID 5 and RAID 6, such data can be recovered from remaining disks and re-written to a repaired disk or to a spare disk. The array is said to be "rebuilt".

A RAID controller, or 'disk array controller' is a device that manages the physical disks and presents them to the computer as logical units. The RAID controller has a front-end interface to a computer system's host adapter. An example of an interface is SCSI. The RAID controller also has a back-end interface for communicating with underlying disks. RAID controllers carry out numerous functions in addition to RAID management and I/O functionality. Examples are controller failover, and array copy services.

JBOD (Just a Bunch of Disks) is another architecture that uses an array of multiple disks. These can be made available to the overlying system as a set of independent disks, or as a spanned single volume without RAID technology.

In a storage system there are many levels of abstraction. A storage disk manages physical placement of data blocks onto the disk media. In-built functionality handles data block placement. For example, a drive can identify media errors, and can therefore relocate blocks to appropriate media positions, whilst still presenting a logical contiguous block space to an upstream storage controller 210.

Consider a RAID 5 array, which comprises a 'stride' length of 5 blocks. The stride comprises 4 data blocks and a parity block. Writing of a file comprises caching data in the RAID controller. The RAID controller calculates a parity value for 4 data blocks of the file at a time. A first 'stripe' P of 5 blocks is written to a drive array: a first data block of P to drive N, a second data block of P to drive N+1, a third data block of P to drive N+2, a fourth data block of P to drive N+3, and parity value of P to drive N+3. In a rotating system, a subsequent 'stripe' of blocks P+1 is written to a drive array starting this time with a first data block of P+1 to drive N+1, second first data block of P+1 to drive N+1, a third data block of P+1 to drive N+2, a fourth data block of P+1 to drive N+3, with the parity value of P+1 written to drive N. Data and parity are rotated around the 5 drive array. An advantage of rotating writes is to even out drive writes.

When a drive fails in a RAID 5 array, a data block of a stride can be rebuilt using the stride blocks on drives that are not failing. For example, if drive N fails in the above example, the second, third, and fourth data blocks of stripe P are XOR'd with the parity bit of drive N+3 to recover the data block N of stripe P.

Embodiments of the present invention combines the use of different compression strategies on storage devices that contain copies of data. An example of a storage device is a storage disk, for example, IBM^{®} FlashCore Modules(FCM). Embodiments will be described in terms of block storage technology, but are equally applicable to other technologies such as file storage technology.

Compression can be implemented without impacting the existing environment and can be used with other storage processes, such as mirrored volumes and Copy Services functions. Compressed volumes provide an equivalent level of availability as regular volumes. When reading a compressed block from a disk, data is uncompressed. Compressed read block performance can vary between disk types, however, IBM FCM disks provide similar compressed block read performance between different compression algorithms. Indeed, read performance of LZ compression can be higher for the higher compression ratios, because the CPU needs to process less compressed data than with lower compression ratios. Presently, FCM's have a fixed compression algorithm, but there are other disks with a variable compression algorithm.

One example that creates a copy is mirroring RAID technology. The standard RAID 1 algorithm protects from disk failure by mirroring data to a second disk. Embodiments of the invention will be described primarily using RAID 1. The skilled person would understand that the present invention also applies to other RAID mirroring technologies such as, but not limited to, RAID 10, RAID 51 or Raid 61.

When a server writes to a mirrored volume, the system writes the data to both copies. When a server reads a mirrored volume, the system picks one of the copies to read. If one of the mirrored volume copies is temporarily unavailable; for example, because the storage system that provides the pool is unavailable, the volume remains accessible to servers. The system remembers which areas of the volume are written and resynchronizes these areas when both copies are available.

When volumes are created, compression can be used to save capacity for the volume. With compressed volumes, data is compressed as it is written to disk, saving more space. When data is read to a host 605, the data is decompressed.

To illustrate embodiments of the invention an embodiment comprises storage drives with compression ratios C1 and C2, wherein C1 is less than C2. The skilled person would understand that a storage device could support multiple values of compression ratio.

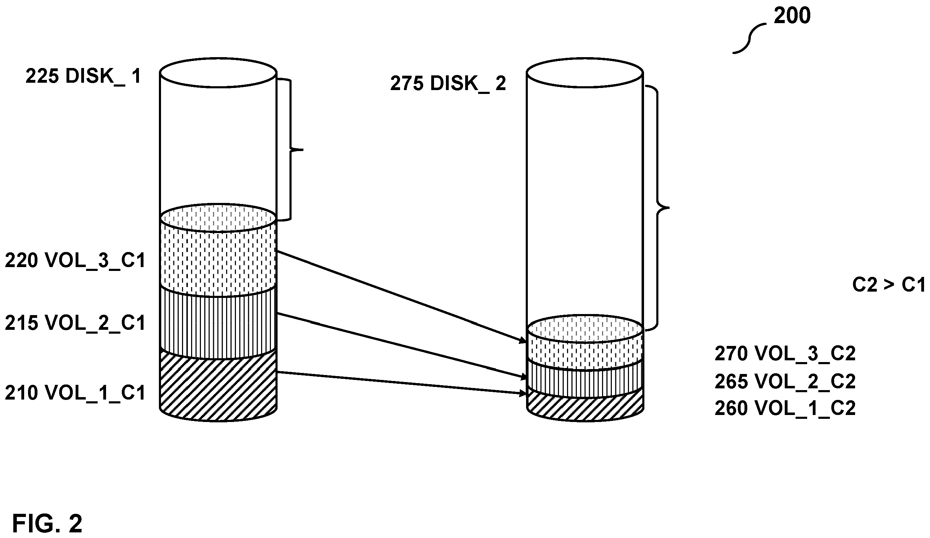

FIG. 2 depicts a high-level exemplary schematic diagram 200 depicting storage drives.

For illustrative purposes only, the figures depict that storage blocks are written on drives contiguously from the bottom of the drives. The skilled person would understand that different write patterns may be used, and indeed that storage blocks can be removed.

FIG. 2 depicts data mirror written to two drives DISK_1 225 and DISK_2 275. As used herein, the term "storage block" will refer to a block of data to be written to or read from a disk. The size of a storage block is set by the Host 205, but common sizes are 4kB, 8kB, 16kB, 32kB, 64kB, 128kB, and 256kB. Sizes 32kB - 256kB are typical.

Three storage blocks VOL_1, VOL_2, and VOL_3 are written to the mirrored disks DISK_1 225 and DISK_2 275. Storage blocks are written to DISK_1 225 with compression ratio C1, and storage blocks are written to DISK_2 275 with compression ratio C2. This results in DISK_1 225 containing compressed volumes VOL_1_C1 210, VOL_2_C1 215, VOL_3_C1 220. DISK_2 275 containing compressed volumes VOL_1_C2 260, VOL_2_C1 265, VOL_3_C1 270. The high compression storage blocks on DISK_2 275 consume less space. If all writes are directed to the disks with this pattern, then eventually one disk would be full (the low compression disk) and the other would still have available space (high compression).

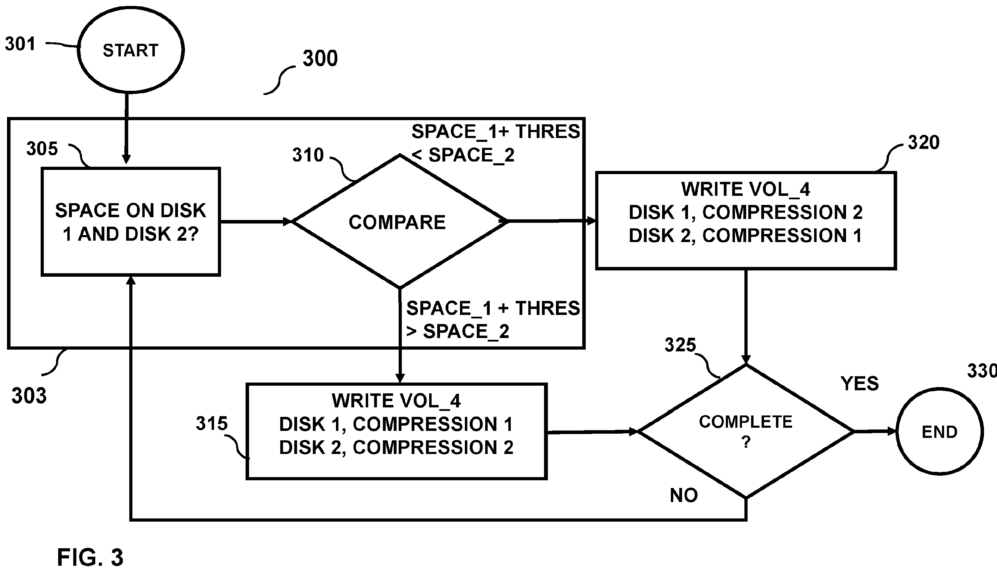

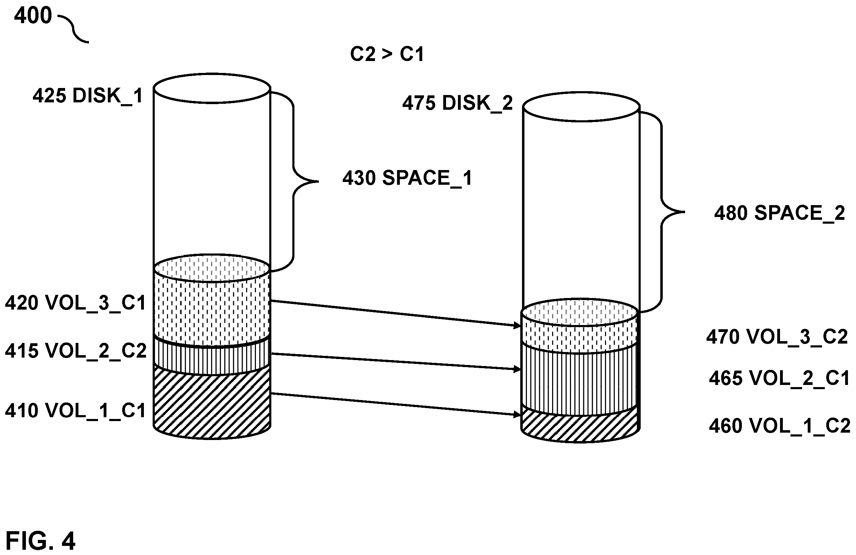

FIG. 3, which should be read in conjunction with FIGS. 4 to 7, depicts a high-level exemplary schematic flow diagram 300 depicting operation methods steps for writing a storage block in a storage array, according to a preferred embodiment of the present invention.

FIG. 4 depicts a high-level exemplary schematic diagram 400 depicting storage disks, according to a preferred embodiment of the present invention.

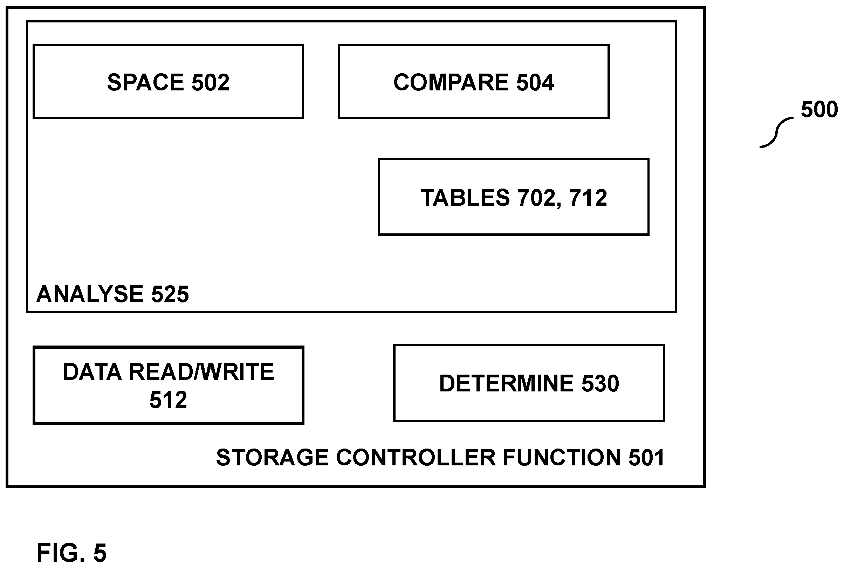

FIG. 5 depicts a high-level exemplary schematic diagram 500 depicting a storage controller, according to a preferred embodiment of the present invention.

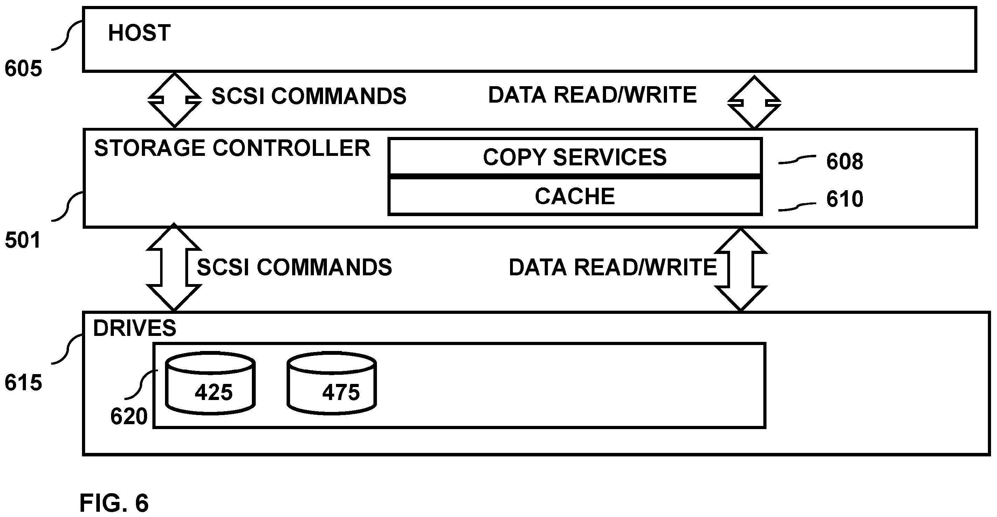

FIG. 6 depicts a high-level exemplary schematic diagram 600 depicting a computer system, according to a preferred embodiment of the present invention. Figure 6 depicts a host 605, a storage controller 501, which has RAID controller functionality, a disk enclosure 615, and a RAID array 620. The storage controller 620 also comprises a stack of components, for example a copy services component 608, and a cache component 610. The RAID array 620 comprises the two storage disks 425, 475. Commands are passed between the host 605, storage controller 501 and disk enclosure 615 using SCSI commands. If a cache 610 is available, data is written to the cache 610 and destaged to the disks according to a cache algorithm. For reads, data is first read from the cache 610, and only if not present (known as a cache miss), the data is read from the disks. Data is read and written across the depicted interfaces.

In embodiments of the method an analyse component 525 analyses a set of compression ratios C1, C2 used for a set of storage blocks VOL_1, VOL_2, VOL_3 (not depicted) previously written on at least two storage devices 425, 475 to determine a pattern of writes. In response to the pattern, a determine component 530 determines compression ratios with which to write a subsequent volume VOL_4 (not depicted). The skilled person would understand that the set of storage blocks can be an empty set.

In an embodiment, the method analyses a set of compression ratios C1, C2 used for a set of storage blocks VOL_1, VOL_2, VOL_3 previously written, by analysing the spare capacity (also known as space) SPACE_1 430 on DISK_1 425, and spare capacity SPACE_2 480 on DISK_2 475.

The method starts at step 301. At step 303 the method analyses a set of compression ratios used for a set of storage blocks written on the first storage device and the second storage device to determine a pattern. As part of step 303, at step 305, a space component 502 determines the spare capacity SPACE_1 430 on DISK_1 425, and spare capacity SPACE_2 480 on DISK_2 475. At step 310, a compare component 504 compares SPACE_1 430 with SPACE_2 480. The compare component 504 determines whether SPACE_1 430 is greater than SPACE_2 480 by a threshold value THRES. By using a threshold value THRES, the algorithm allows for a tolerance to be set when determining whether to switch compression ratios. Alternatively, the compare component 504 determines whether SPACE_1 430 is not greater than SPACE_2 480 by the threshold value THRES. By using a threshold value THRES, the algorithm allows for a tolerance to be set when determining whether to switch compression ratios. The threshold could also be set to zero.

FIG. 4 also shows data mirror written to two disks DISK_1 425 and DISK_2 475. Three storage blocks VOL_1, VOL_2, and VOL_3 have been written to the mirrored disks DISK_1 425 and DISK_2 475. Storage blocks VOL_1, and VOL_3 were written to DISK_1 425 with compression ratio C1, and storage block VOL_2 was written to DISK_1 425 with compression ratio C2. Storage blocks VOL_1, and VOL_3 were written to DISK_2 475 with compression ratio C2, and storage block VOL_2 was written to DISK_2 475 with compression ratio C1. This results in DISK_1 425 containing compressed volumes VOL_1_C1 410, VOL_2_C2 415, VOL_3_C1 420. DISK_2 475 contains compressed volumes VOL_1_C2 460, VOL_2_C 465, VOL_3_C1 470. FIG. 4 depicts that SPACE_1 430 is less than SPACE_2 480. Less space is used on DISK_2 475 (so more space) than on the DISK_1 425 partner disk. So therefore, DISK_2 475 is a good candidate for the next low compression write.

At step 315, if SPACE_1 430 is greater than SPACE_2 480 by the threshold value THRES a data read/write component 512 writes storage block VOL_4 to DISK_1 425 with compression ratio C2, and to DISK_2 475 with compression ratio C1. The method then passes to step 325.

At step 320, if SPACE_1 430 is not greater than SPACE_2 480 by the threshold value THRES, the data read/write component 512 writes storage block VOL_4 to DISK_1 425 with compression ratio C1, and to DISK_2 475 with compression ratio C2. The method then passes to step 325.

At step 325, it is determined whether there are further storage blocks to write. If there are further storage blocks to write, the method returns to step 305. If there are not further storage blocks to write, the method ends at step 330.

Advantageously, by measuring the space capacity, appropriate compression ratios for subsequent writes can be determined, taking into consideration the actual compression ratios achieved for storage blocks already written to the disks.

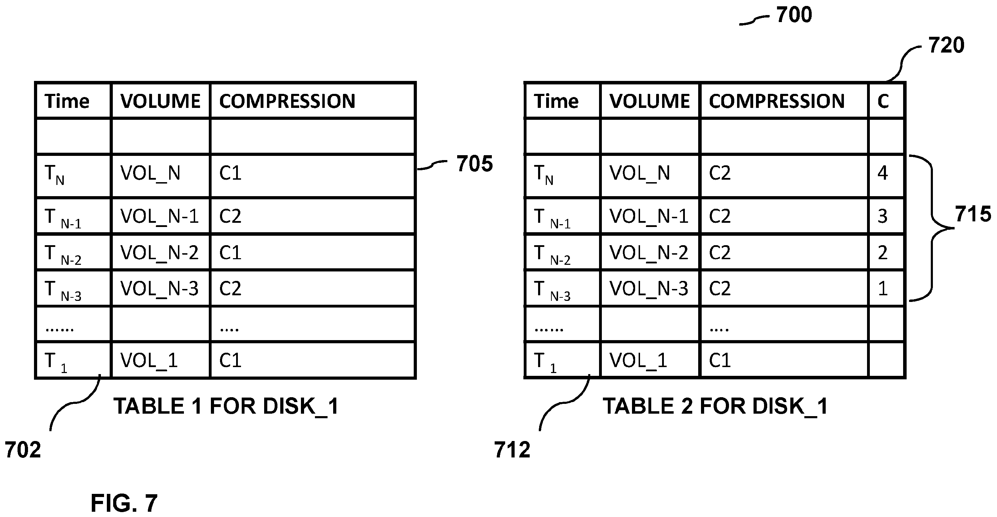

FIG. 7 depicts a high-level exemplary schematic diagram 700 depicting tables used to determine a pattern of compression ratios, according to a preferred embodiment of the present invention.

In an alternative embodiment, at step 303 the method analyses the set of compression ratios C1, C2 used for the set of storage blocks VOL_X (X = 1 to N) previously written, by analysing the most recently written storage block VOL_N on DISK_1 425, and VOL_N written on DISK_2 475. A pattern is stored in compression table TABLE 1 702 for DISK_1 425. The pattern is depicted as {C1, ...C2, C1, C2, C1}. The compression ratio most recently used is for the write of VOL_N on DISK_1 425 and is determined by reviewing the entry 705 for T_{N} as C1. A pattern is also stored in a compression table (not shown) for DISK_2 475. The compression ratio most recently used for the write of VOL_N on DISK_2 475 is determined as C2. The method determines that for the write of VOL_N+1 to DISK_1 425 a compression ratio most recently used for the write of VOL_N on DISK_2 475 of C2 is used. The method also determines that for the write of VOL_N+1 to DISK_2 475 a compression ratio most recently used for the write of VOL_N on DISK_1 425 of C1 is used. The method rotates which disk is using which compression technique so that the total storage used on the disks remains balanced. The method rotates after each write, resulting in VOL_N+1 (not depicted) written with compression ratio C2 on DISK_1 425, and VOL_N+1 written with compression ratio C1 on DISK_2 475.

In an alternative embodiment, at step 303 the method rotates which disk is using which compression technique so that the total storage used on the disks remains balanced after a set number of writes Y = 4 had been mirrored or copied to each disk. At step 303 the method analyses the set of compression ratios C1, C2 used for the set of storage blocks VOL_X (X = 1 to N) previously written, by analysing the most recently written storage blocks VOL_N - VOL_1 on DISK_1 425, and VOL_N - VOL_1 written on DISK_2 475. A pattern is stored in compression table TABLE 2 712 for DISK_1 425. The pattern is depicted as {C1, ...C2, C2, C2, C2}. A count of times that a compression ratio has been sequentially used is also stored in column C 720. The table TABLE 2 712 shows that the most recent volumes VOL_N to VOL_N-3 used a compression ratio of C2 for writes to DISK_1 425, and that this compression ratio has been used four times in a row. A corresponding table (not shown) for DISK_2 475 would show the most recent volumes VOL_N to VOL_N-3 used a compression ratio of C1 for writes to DISK_2 475. As, in this embodiment, Y is set at 4, when VOL_N+1 is mirror written to DISK_1 425 and DISK_2 475, a compression ratio of C1 will be used for DISK_1 425, and of C2 for DISK_2 475.

The skilled person would understand that Y can be any integer number, and indeed that other patterns can be established as triggering a compression ratio change for the next write. Such patterns may be dependent on the relative size of the compression ratios C1 and C2. The skilled person would also understand that a number of compression ratios C1 - CN may be used in embodiments of the invention.

By using this algorithm the benefit of higher compression to save space can be used while the impact of the slower performance can be hidden. Writes can complete when the faster, low compressed writes has completed, and any Read would not be impacted by needing to do a slower decompression as the reads can always be directed to the mirror with the low compressed version of the data.

In an alternative embodiment, the RAID array is configured for RAID 51. This represents a stack of RAIDs, equivalent to a logical RAID 1 overlying a RAID 5 array. The invention still applies with the two disks DISK_1 425 and DISK_2 475 being replaced by two logical disks LDISK_1 and LDISK_2 (not shown). Each of these two disks are made up of two RAID 5 arrays. In order to analyse spare space, the spare space on disks making up the RAID 5 arrays need to be taken into consideration, as do the compression ratios used on these disks.

Embodiments of the present invention also applies to other copy function technologies, for example, point-in-time copy functions to create snapshot and clone copies, asynchronous remote copy, and synchronous remote copy. An example of a point-in-time offering is IBM Flashcopy^{®}.

IBM Remote mirror and copy is a storage feature that constantly updates a target copy of a volume so that it matches changes that were made to its associated source volume. IBM Remote mirror and copy does not capture the state of the source volume at some point in time, but rather reflects all changes that were made on the source volume to the target volume.

IBM Global Copy provides an asynchronous long-distance copy option where write operations to a storage unit at a production site are considered complete before they are transmitted to a storage unit at your recovery site. IBM Metro Mirror functions provides a synchronous long-distance copy option that constantly updates a secondary copy of a volume to match changes made to a source volume. Writes to the production site are only considered complete when transmitted to a storage unit at your recovery site.

Point - in - time copy is a feature supported on various storage devices that allows nearly instantaneous point in - time copies of entire logical volumes or data sets to be made. The point - in - time function allows full volume copies of data to be made, with the copies immediately available for read or write access. The copy may be used with standard backup tools that are available in a computing environment to create backup copies on tape.

" Snapshot" provides the ability to record the state of a storage device at any given moment and preserve that snapshot as a guide for restoring the storage device in the event that it fails. A snapshot primarily creates a point - in time copy of the data. Typically, a snapshot copy function is done instantly and made available for use by other applications such as data protection, data analysis and reporting and data replication applications. The original copy of the data continues to be available to the applications without interruption, while the snapshot copy is used to perform other functions on the data. A snapshot is a point - in - time copy that is dependent on the primary disk. A snapshot may, for example, be accomplished using a copy - on - write procedure, in which currently existing data in a region on the primary disk is written to the backup disk when a write is being made to the region on the primary disk. Thus, the backup disk will contain data that has been overwritten on the primary disk , as opposed to a complete copy of the primary disk. This type of backup copy typically results in a thinly provisioned volume, which reduces storage. A series of snapshot copies may be cascaded together to represent the primary disk at various times. However, the snapshot copies typically remain dependent on the primary disk to reassemble a complete copy of the primary disk. Therefore, a snapshot is a point - in - time copy where the target only holds the changed data necessary to present the point - in - time copy of the source. Data is only copied to the target disk if it is changed on the source. The target disk is generally always dependent on some of the data on the source disk in order to present the point - in - time copy.

In contrast, a " clone " is a point - in - time copy that is independent of the primary disk. A clone may, for instance, be created by executing a background copy procedure in which a disk's regions are sequentially copied to the backup disk and executing a copy - on - write procedure to immediately copy any primary disk regions that are about to be overwritten due to a write and have not yet been processed by the background copy procedure. A clone is typically used when a copy is needed and input / output ( I / O ) to the copy must not impact I/O to the primary volume in any way. A clone may also be used when the copy is not to be affected by availability to the source. A clone may also be used in a cascade. Therefore, a clone is a point - in - time copy where the target disk will hold a complete copy of the data that was on the source disk when the point - in - time copy was started. When the copying of the data from source to target completes, the target disk is independent of the source.

Point-in-time copies are made using a bitmap to keep track of data grains copied over from a source disk to a target disk. When data is copied between a source and a target, the data is copied in chunks known as "grains." Grain size is determined at the time of mapping creation. Typical sizes are 256KB and 64KB. Data grains are copied using a background copy process. In the event of a read of a data grain to the target drive before the data grain has been copied over the target, the read is redirected to the source drive. In the event of a read of a data grain to the target drive after the data grain has been copied over the target, the read is directed to the target drive. In the event of a write of a data grain to the target drive before the data grain has been copied over the target, the corresponding entry in the bitmap is marked as complete. In the event of a write of a data grain to the target drive after the data grain has been copied over the target, the write is directed to the target drive. In the event of a write of a data grain to the source drive before the data grain has been copied over the target, the data grain is first copied to the target drive before the source disk data grain is overwritten with new data. In this way the source and target drives are presented to the host as being instantaneously available, even before all data has actually been copied over to the target drive.

In a RAID1 write, a storage block is written to two disks at the same time. In contrast, in a remote copy an existing storage block is copied from a source to a target, equivalent to performing a read from the source, and a write to the target.

In an alternative embodiment of the present invention, DISK_2 475 is a target volume for a copy operation from DISK_1 425. The method comprises analysing a set of compression ratios used on the copy source volume, and on the copy target volume, to determine a pattern. The pattern is analysed to determine a first compression ratio to be used with subsequent writes to the source disk, and a second compression ratio to be used for subsequent writes to the target drive. Writes to the target as part of the copying process should also take into consideration the compression ratio of the source grain to determine the compression ratio of the target write.

In another embodiment, the target is a point in time copy of a source. When a grain of the source is overwritten, a copy of the grain is first made to the target of the existing data on the source drive. Analysing compression ratios, the write of the existing data to the target disk can be made using one compression ratio, and the write of the new data to the source can use another, different, ratio.

The descriptions of the various embodiments of the present disclosure have been presented for purposes of illustration, but are not intended to be exhaustive or limited to the embodiments disclosed. Many modifications and variations will be apparent to those of ordinary skill in the art. The terminology used herein was chosen to best explain the principles of the embodiments, the practical application or technical improvement over technologies found in the marketplace, or to enable others of ordinary skill in the art to understand the embodiments disclosed herein. It will be readily understood that the components of the application, as generally described and illustrated in the figures herein, may be arranged and designed in a wide variety of different configurations. Thus, the detailed description of the embodiments is only limited by the scope of the appended claims.

One having ordinary skill in the art will readily understand that the above invention may be practiced with steps in a different order, and/or with hardware elements in configurations that are different than those which are disclosed. Therefore, although the application has been described based upon these preferred embodiments, it would be apparent to those of skill in the art that certain modifications, variations, and alternative constructions would be apparent.

While preferred embodiments of the present application have been described, it is to be understood that the embodiments described are illustrative only and the scope of the application is to be defined solely by the appended claims.

Moreover, the same or similar reference numbers are used throughout the drawings to denote the same or similar features, elements, or structures, and thus, a detailed explanation of the same or similar features, elements, or structures will not be repeated for each of the drawings. The terms "about" or "substantially" as used herein with regard to thicknesses, widths, percentages, ranges, etc., are meant to denote being close or approximate to, but not exactly. For example, the term "about" or "substantially" as used herein implies that a small margin of error is present. Further, the terms "vertical" or "vertical direction" or "vertical height" as used herein denote a Z-direction of the Cartesian coordinates shown in the drawings, and the terms "horizontal," or "horizontal direction," or "lateral direction" as used herein denote an X-direction and/or Y-direction of the Cartesian coordinates shown in the drawings.

Additionally, the term "illustrative" is used herein to mean "serving as an example, instance or illustration." Any embodiment or design described herein is intended to be "illustrative" and is not necessarily to be construed as preferred or advantageous over other embodiments or designs.

It is to be understood that although this disclosure includes a detailed description on cloud computing, implementation of the teachings recited herein are not limited to a cloud computing environment. Rather, embodiments of the present invention are capable of being implemented in conjunction with any other type of computing environment now known or later developed.

For the avoidance of doubt, the term "comprising", as used herein throughout the description is not to be construed as meaning "consisting only of".

## Claims

1. A computer implemented method for managing a storage system, the storage system comprising a first storage device (425) and a second storage device (475), the method comprising:
analysing a set of compression ratios (C1, C2) used for a set of storage blocks written on the first storage device and the second storage device to determine a pattern;
determining a first spare capacity (SPACE_1) on the first storage device and second spare capacity (SPACE_2) on the second storage device;
in response to the pattern, determining a first compression ratio and a second compression ratio, the first compression ratio being different from the second compression ratio, wherein determining the first compression ratio and the second compression ratio comprises:
in response to determining that the first spare capacity is greater than the second spare capacity by a threshold value, determining the first compression ratio as being less than the second compression ratio; and
in response to determining that the first spare capacity is less than the second spare capacity by the threshold value, determining the first compression ratio as being greater than the second compression ratio; and
writing a storage block (VOL_N) to the first storage device with the first compression ratio and writing the storage block to the second storage device with the second compression ratio.

2. The method of claim 1, wherein:
analysing the set of compression ratios (C1, C2) comprises determining that a third compression ratio has been used for the most recent Y writes to the first storage device, and a fourth compression ratio has been used for the most recent Y writes to the second storage device; and
determining the first compression ratio comprises determining that the first compression ratio equals the fourth compression ratio, and determining the second compression ratio comprises determining the second compression ratio comprises the third compression ratio.

3. The method of any of the preceding claims, wherein the first storage device and the second storage device are members of a RAID array (620).

4. The method of claim 3, wherein the RAID array (620) is a member of a list, the list comprising RAID 1, RAID 10, RAID 51, and RAID 61.

5. The method of any of the preceding claims, wherein the second storage device (475) is a copy of the first storage device (425).

6. The method of claim 5, wherein the second storage device (475) is a point-in-time copy of the first storage device (425).

7. A system for managing a storage array (420) in a storage system, the storage array comprising a first storage device (425)and a second storage device (475), the system comprising:
an analyse component (525) for analysing a set of compression ratios (C1, C2) used for a set of storage blocks (VOL_N) written on the first storage device and the second storage device to determine a pattern, and for determining a first spare capacity (SPACE_1) on the first storage device (425) and second spare capacity (SPACE_2) on the second storage device;
responsive to the pattern, a determine component (530) for determining a first compression ratio and a second compression ratio, the first compression ratio being different from the second compression ratio, wherein determining the first compression ratio and the second compression ratio comprises:
in response to determining that the first spare capacity is greater than the second spare capacity by a threshold value, determining the first compression ratio as being less than the second compression ratio; and
in response to determining that the first spare capacity is less than the second spare capacity by the threshold value, determining the first compression ratio as being greater than the second compression ratio; and
a data read/write component (512) for writing a storage block to the first storage device with the first compression ratio and writing the storage block to the second storage device with the second compression ratio.

8. The system of claim 7, wherein:
the analyse component (525) is further operable for determining that a third compression ratio has been used for the most recent Y writes to the first storage device, and a fourth compression ratio has been used for the most recent Y writes to the second storage device; and
the determine component is further operable for determining that the first compression ratio (C1) equals the fourth compression ratio, and determining the second compression ratio (C2) comprises determining the second compression ratio comprises the third compression ratio.

9. The system of claim 7, wherein the first storage device (425) and the second storage device (475) are members of a RAID array (420).

10. The system of claim 9, wherein the RAID array (420) is a member of a list, the list comprising RAID 1, RAID 10, RAID 51, and RAID 61.

11. The system of claim 7, wherein the second storage device (475) is a copy of the first storage device (425).

12. The system of claim 11, wherein the second storage device (475) is a point-in-time copy of the first storage device (425).

13. A computer program product for managing a storage array in a storage system, the computer program product comprising instructions which, when the program is executed by a processing circuit, cause the processing circuit to carry out the method according to any of claims 1 to 6.

14. A computer-readable medium comprising software code portions loadable into the internal memory of a digital computer which, when executed by the digital computer, cause the digital computer to carry out the method of any of claims 1 to 6.

## Patentansprüche

1. Computerrealisiertes Verfahren zum Verwalten eines Speichersystems, wobei das Speichersystem eine erste Speichereinheit (425) und eine zweite Speichereinheit (475) aufweist, wobei das Verfahren aufweist:
Analysieren eines Satzes von Kompressionsverhältnissen (C1, C2), die für einen Satz von Speicherblöcken verwendet werden, die auf die erste Speichereinheit und die zweite Speichereinheit geschrieben wurden, um ein Muster zu bestimmen;
Bestimmen einer ersten Reservekapazität (SPACE_1) auf der ersten Speichereinheit und einer zweiten Reservekapazität (SPACE_2) auf der zweiten Speichereinheit;
in Reaktion auf das Muster Bestimmen eines ersten Kompressionsverhältnisses und eines zweiten Kompressionsverhältnisses, wobei das erste Kompressionsverhältnis von dem zweiten Kompressionsverhältnis abweicht, wobei das Bestimmen des ersten Kompressionsverhältnisses und des zweiten Kompressionsverhältnisses aufweist:
in Reaktion auf das Bestimmen, dass die erste Reservekapazität um einen Schwellenwert größer als die zweite Reservekapazität ist, Bestimmen, dass das erste Kompressionsverhältnis kleiner als das zweite Kompressionsverhältnis ist; und
in Reaktion auf das Bestimmen, dass die erste Reservekapazität um den Schwellenwert kleiner als die zweite Reservekapazität ist, Bestimmen, dass das erste Kompressionsverhältnis größer als das zweite Kompressionsverhältnis ist; und
Schreiben eines Speicherblocks (VOL_N) in die erste Speichereinheit mit dem ersten Kompressionsverhältnis und Schreiben des Speicherblocks in die zweite Speichereinheit mit dem zweiten Kompressionsverhältnis.

2. Verfahren nach Anspruch 1, wobei:
das Analysieren des Satzes von Kompressionsverhältnissen (C1, C2) das Bestimmen aufweist, dass ein dritten Kompressionsverhältnis für die letzten Y Schreibvorgänge in die erste Speichereinheit verwendet wurde, und dass ein viertes Kompressionsverhältnis für die letzten Y Schreibvorgänge in die zweite Speichereinheit verwendet wurde; und
das Bestimmen des ersten Kompressionsverhältnisses das Bestimmen aufweist, dass das erste Kompressionsverhältnis mit dem vierten Kompressionsverhältnis übereinstimmt, und das Bestimmen des zweiten Kompressionsverhältnisses das Bestimmen aufweist, dass das zweite Kompressionsverhältnis das dritte Kompressionsverhältnis aufweist.

3. Verfahren nach einem der vorangehenden Ansprüche, wobei die erste Speichereinheit und die zweite Speichereinheit Elemente eines RAID-Arrays (620) sind.

4. Verfahren nach Anspruch 3, wobei es sich bei dem RAID-Array (620) um ein Element einer Liste handelt, wobei die Liste RAID 1, RAID 10, RAID 51 und RAID 61 aufweist.

5. Verfahren nach einem der vorangehenden Ansprüche, wobei es sich bei der zweiten Speichereinheit (475) um eine Kopie der ersten Speichereinheit (425) handelt.

6. Verfahren nach Anspruch 5, wobei es sich bei der zweiten Speichereinheit (475) um eine Zeitpunkt-Kopie der ersten Speichereinheit (425) handelt.

7. System zum Verwalten eines Speicherarrays (420) in einem Speichersystem, wobei das Speicherarray eine erste Speichereinheit (425) und eine zweite Speichereinheit (475) aufweist, wobei das System aufweist:
eine Analysekomponente (525) zum Analysieren eines Satzes von Kompressionsverhältnissen (C1, C2), die für einen Satz von Speicherblöcken (VOL_N) verwendet werden, die auf die erste Speichereinheit und die zweite Speichereinheit geschrieben wurden, um ein Muster zu bestimmen, und zum Bestimmen einer ersten Reservekapazität (SPACE_1) auf der ersten Speichereinheit (425) und einer zweiten Reservekapazität (SPACE_2) auf der zweiten Speichereinheit;
in Reaktion auf das Muster eine Bestimmungskomponente (530) zum Bestimmen eines ersten Kompressionsverhältnisses und eines zweiten Kompressionsverhältnisses, wobei sich das erste Kompressionsverhältnis von dem zweiten Kompressionsverhältnis unterscheidet, wobei das Bestimmen des ersten Kompressionsverhältnisses und des zweiten Kompressionsverhältnisses aufweist:
in Reaktion auf das Bestimmen, dass die erste Reservekapazität um einen Schwellenwert größer als die zweite Reservekapazität ist, Bestimmen, dass das erste Kompressionsverhältnis kleiner als das zweite Kompressionsverhältnis ist; und
in Reaktion auf das Bestimmen, dass die erste Reservekapazität um den Schwellenwert kleiner als die zweite Reservekapazität ist, Bestimmen, dass das erste Kompressionsverhältnis größer als das zweite Kompressionsverhältnis ist; und
eine Daten-Lese/Schreibkomponente (512) zum Schreiben eines Speicherblocks in die erste Speichereinheit mit dem ersten Kompressionsverhältnis und Schreiben des Speicherblocks in die zweite Speichereinheit mit dem zweiten Kompressionsverhältnis.

8. System nach Anspruch 7, wobei:
die Analysekomponente (525) ferner zum Bestimmen betreibbar ist, dass ein drittes Kompressionsverhältnis für die letzten Y Schreibvorgänge in die erste Speichereinheit verwendet wurde, und dass ein viertes Kompressionsverhältnis für die letzten Y Schreibvorgänge in die zweite Speichereinheit verwendet wurde; und
die Bestimmungskomponente ferner zum Bestimmen, dass das erste Kompressionsverhältnis (C1) mit dem vierten Kompressionsverhältnis übereinstimmt, und zum Bestimmen betreibbar ist, dass das zweite Kompressionsverhältnis (C2) das Bestimmen aufweist, dass das zweite Kompressionsverhältnis das dritte Kompressionsverhältnis aufweist.

9. System nach Anspruch 7, wobei die erste Speichereinheit (425) und die zweite Speichereinheit (475) Elemente eines RAID-Arrays (420) sind.

10. System nach Anspruch 9, wobei das RAID-Array (420) ein Element einer Liste ist, wobei die Liste RAID 1, RAID 10, RAID 51 und RAID 61 aufweist.

11. System nach Anspruch 7, wobei es sich bei der zweiten Speichereinheit (475) um eine Kopie der ersten Speichereinheit (425) handelt.

12. System nach Anspruch 11, wobei es sich bei der zweiten Speichereinheit (475) um eine Zeitpunkt-Kopie der ersten Speichereinheit (425) handelt.

13. Computer-Programmprodukt zum Verwalten eines Speicherarrays in einem Speichersystem, wobei das Computer-Programmprodukt Anweisungen aufweist, die, wenn das Programm durch eine Verarbeitungsschaltung ausgeführt wird, die Verarbeitungsschaltung zum Durchführen des Verfahrens nach einem der Ansprüche 1 bis 6 veranlasst.

14. Computerlesbares Medium, das Softwarecode-Abschnitte aufweist, die in den internen Arbeitsspeicher eines Digitalcomputers ladbar sind, wobei die Softwarecode-Abschnitte, wenn sie durch den Digitalcomputer ausgeführt werden, den Digitalcomputer zum Durchführen des Verfahrens nach einem der Ansprüche 1 bis 6 veranlassen.

## Revendications

1. Procédé mis en œuvre par ordinateur de gestion d'un système de stockage, le système de stockage comprenant un premier dispositif de stockage (425) et un deuxième dispositif de stockage (475), le procédé comprenant :
l'analyse d'un ensemble de taux de compression (C1, C2) utilisés pour un ensemble de blocs de stockage écrits sur le premier dispositif de stockage et le deuxième dispositif de stockage afin de déterminer un modèle ;
la détermination d'une première capacité de réserve (SPACE_1) sur le premier dispositif de stockage et d'une deuxième capacité de réserve (SPACE_2) sur le deuxième dispositif de stockage ;
en réponse du modèle, la détermination d'un premier taux de compression et d'un deuxième taux de compression, le premier taux de compression étant différent du deuxième taux de compression, dans lequel la détermination du premier taux de compression et du deuxième taux de compression comprend :
en réponse à la détermination que la première capacité de réserve est supérieure à la deuxième capacité de réserve d'une valeur seuil, la détermination du premier taux de compression comme étant inférieur au deuxième taux de compression ; et
en réponse à la détermination que la première capacité de réserve est inférieure à la deuxième capacité de réserve de la valeur seuil, la détermination du premier taux de compression comme étant supérieur au deuxième taux de compression ; et
l'écriture d'un bloc de stockage (VOL_N) dans le premier dispositif de stockage avec le premier taux de compression et l'écriture du bloc de stockage dans le deuxième dispositif de stockage avec le deuxième taux de compression.

2. Procédé selon la revendication 1, dans lequel :
l'analyse de l'ensemble de taux de compression (C1, C2) comprend la détermination qu'un troisième taux de compression a été utilisé pour les Y écritures les plus récentes dans le premier dispositif de stockage et qu'un quatrième taux de compression a été utilisé pour les Y écritures les plus récentes dans le deuxième dispositif de stockage ; et
la détermination du premier taux de compression comprend la détermination que le premier taux de compression équivaut au quatrième taux de compression et la détermination du deuxième taux de compression comprend la détermination que le deuxième taux de compression comprend le troisième taux de compression.

3. Procédé selon une quelconque des revendications précédentes, dans lequel le premier dispositif de stockage et le deuxième dispositif de stockage sont membres d'une matrice RAID (620).

4. Procédé selon la revendication 3, dans lequel la matrice RAID (620) est un membre d'une liste, la liste comprenant RAID 1, RAID 10, RAID 51 et RAID 61.

5. Procédé selon une quelconque des revendications précédentes, dans lequel le deuxième dispositif de stockage (475) est une copie du premier dispositif de stockage (425).

6. Procédé selon la revendication 5, dans lequel le deuxième dispositif de stockage (475) est une copie ponctuelle du premier dispositif de stockage (425).

7. Système de gestion d'une matrice de stockage (420) dans un système de stockage, la matrice de stockage comprenant un premier dispositif de stockage (425) et un deuxième dispositif de stockage (475), le système comprenant :
un composant d'analyse (525) pour analyser un ensemble de taux de compression (C1, C2) utilisés pour un ensemble de blocs de stockage (VOL_N) écrits sur le premier dispositif de stockage et le deuxième dispositif de stockage afin de déterminer un modèle et déterminer une première capacité de réserve (SPACE_1) sur le premier dispositif de stockage (425) et une deuxième capacité de réserve (SPACE_2) sur le deuxième dispositif de stockage ;
en réponse au modèle, un composant de détermination (530) pour la détermination d'un premier taux de compression et un deuxième taux de compression, le premier taux de compression étant différent du deuxième taux de compression, dans lequel la détermination du premier taux de compression et du deuxième taux de compression comprend :
en réponse à la détermination que la première capacité de réserve est supérieure à la deuxième capacité de réserve d'une valeur seuil, la détermination du premier taux de compression comme étant inférieur au deuxième taux de compression ; et
en réponse à la détermination que la première capacité de réserve est inférieure à la deuxième capacité de réserve de la valeur seuil, la détermination du premier taux de compression comme étant supérieur au deuxième taux de compression ; et
un composant de lecture/écriture de données (512) pour l'écriture d'un bloc de stockage dans le premier dispositif de stockage avec le premier taux de compression et l'écriture du bloc de stockage dans le deuxième dispositif de stockage avec le deuxième taux de compression.

8. Système selon la revendication 7, dans lequel :
le composant d'analyse (525) est en outre fonctionnel pour déterminer qu'un troisième taux de compression a été utilisé pour les Y écritures les plus récentes dans le premier dispositif de stockage et qu'un quatrième taux de compression a été utilisé pour les Y écritures les plus récentes dans le deuxième dispositif de stockage ; et
le composant de détermination est en outre fonctionnel pour déterminer que le premier taux de compression (C1) équivaut au quatrième taux de compression et la détermination du deuxième taux de compression (C2) comprend la détermination que le deuxième taux de compression comprend le troisième taux de compression.

9. Système selon la revendication 7, dans lequel le premier dispositif de stockage (425) et le deuxième dispositif de stockage (475) sont membres d'une matrice RAID (420).

10. Système selon la revendication 9, dans lequel la matrice RAID (420) est un membre d'une liste, la liste comprenant RAID 1, RAID 10, RAID 51 et RAID 61.

11. Système selon la revendication 7, dans lequel le deuxième dispositif de stockage (475) est une copie du premier dispositif de stockage (425).

12. Système selon la revendication 11, dans lequel le deuxième dispositif de stockage (475) est une copie ponctuelle du premier dispositif de stockage (425).

13. Produit de programme informatique pour gérer une matrice de stockage dans un système de stockage, le produit de programme informatique comprenant des instructions qui, lorsque le programme est exécuté par un circuit de traitement, amènent le circuit de traitement à mettre en œuvre un procédé selon une quelconque des revendications 1 à 6.

14. Support lisible par ordinateur comprenant des portions de code logiciel chargeables dans la mémoire interne d'un ordinateur numérique qui, lorsqu'elles sont exécutées par l'ordinateur numérique, amènent l'ordinateur numérique à mettre en œuvre le procédé d'une quelconque des revendications 1 à 6.
